# EUROPEAN PATENT SPECIFICATION

(11) **EP 1 189 501 B1**
(45) Date of publication and mention of the grant of the patent: **28.02.2007**
(21) Application number: 00925755.1
(22) Date of filing: 26.04.2000
(51) Int. Cl.: A01G 13/02, A01G 13/10, B60P 7/04, B60P 7/06, F16B 45/00

(54) **SHEET FASTENING AND ANCHORING COMPONENT**
FOLIEBEFESTIGUNGS- UND VERANKERUNGSTEIL
ELEMENT DE FIXATION ET D'ANCRAGE DE FEUILLE

(30) Priority: 23.04.1999 NZ 33540699
(43) Date of publication of application: 27.03.2002
(73) Proprietor: Extenday IP Limited, Auckland (NZ)
(72) Inventor: Toye, Jonathan Dallas, Kumeu, Auckland (NZ)
(74) Representative: Harrison Goddard Foote
(86) International application number: PCT/NZ2000/000062
(87) International publication number: WO 2001/006840

(56) References cited:
- WO-A-98/41769
- WO-A-98/41770
- AT-B- 398 816
- FR-A- 2 352 204
- FR-A- 2 404 759
- US-A- 2 907 057
- US-A- 5 546 639
- US-A- 5 638 584
- Design Registration No. 76829, Class 08-08C (WOOD), 7 June 1979

## Description

### FIELD OF INVENTION

The invention relates to a fastening component, particularly but not solely designed for use in anchoring agricultural sheeting, textile or film to a support, and a method of anchoring agricultural sheeting, textile or film to a support.

### BACKGROUND TO INVENTION

It is known in the art to use a ground cover material in association with agricultural crops. Traditionally, these materials have been attached or fastened to the ground by placement of weights on top of the material, such as soil along the edge of the material, soil in discrete piles, stones or rocks, lengths of wood or timber, bags filled with sand or soil and/or plastic containers filled with water. Other forms of fasteners penetrate the material and extend into the soil below, such as U-shaped wire staples, plastic pins and wire nails or pins such as that described in AT 398816.

Weights placed on top of the cover have the disadvantage that they are cumbersome and/or time consuming to apply. The weights are traditionally bulky objects extending above the cover and so restrict traffic over the cover. Where the cover is designed to reflect light, placement of opaque weights on the cover may reduce the effectiveness of the material.

Where a staple, pin or nail is used, there is a potential that the material will be damaged or weakened. When traffic, such as tractors, move over the material, the load of the traffic is borne around the fastener and the area where the fastener penetrates the cover can rip or tear, such that the fastener no longer holds the cover. If the cover around the fastener does not rip, then the force of the traffic is borne by the fastener fully, so that it can be directly or progressively dislodged from the soil and therefore no longer acts as an effective fastener.

The same difficulties may be experienced where the material is used in areas of high wind. The force of the wind tends to lift the cover from the ground surface. Where weights are placed on top of the cover, the force of the wind can lift the cover out from under the weights. Alternatively, where a fastener that penetrates the material is used, the cover can rip or tear where the fastener penetrates the material and the fastener may be also directly or progressively dislodged from the soil.

In broad terms the invention comprises a fastening component for use in anchoring agricultural sheeting, textile or film to a support according to claim 1.

In broad terms in another form, the invention comprises a method of anchoring agricultural sheeting, textile or film to a support according to claim 16.

In yet another form in broad terms the invention comprises agricultural sheeting, textile or film anchored to a support or supports by the above method.

### BRIEF DESCRIPTION OF THE DRAWINGS

Preferred forms of the fastening component and method will now be described by way of example and without intending to be limiting, with reference to the accompanying drawings in which:
Figure 1 shows the invention in use;
Figure 2 shows a preferred form fastening component and preferred form attachment cord;
Figures 3A to 3D show preferred form fastening components;
Figures 4A to 4D show preferred form attachment cords and methods; and
Figures 5A and 5C show preferred form apertures, eyelets and domes with apertures for the prong or prongs.

### DETAILED DESCRIPTION OF PREFERRED FORMS

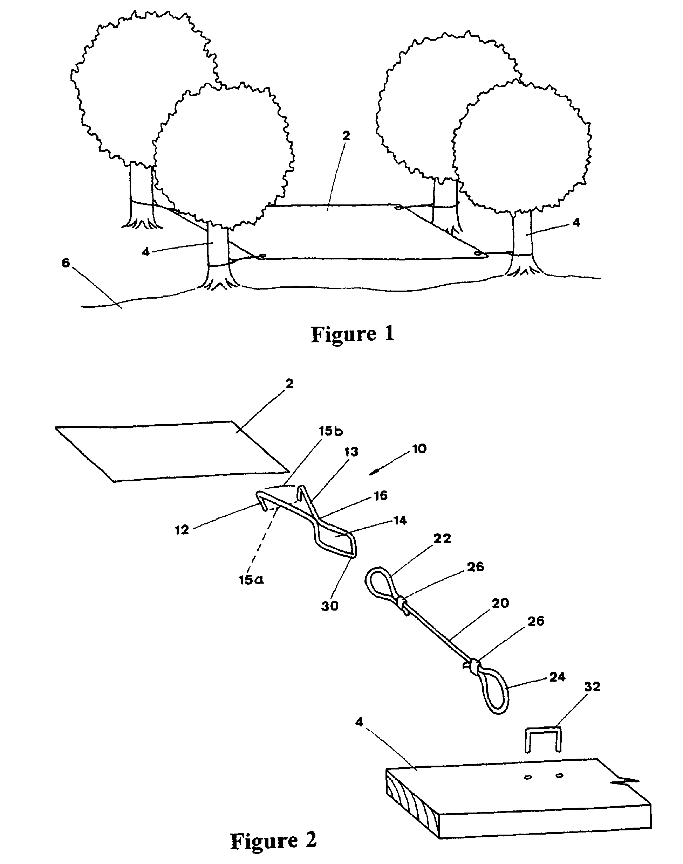

Figure 1 illustrates one preferred use of the invention. Agricultural sheeting, textile or film 2 is shown anchored underneath agricultural crops 4. The preferred agricultural sheeting, textile or film is formed of a suitable non-woven, woven or knitted textile or film or sheeting material, particularly suitable for ground cover, and may have reflective properties. It will be appreciated that the sheeting, textile or film could be anchored along a crop row and the fasteners could be positioned around the base of each trunk or vine as a support.

The fastening component, with a length of resiliently extensible and/or inextensible material, that is fastened to the sheeting, textile or film, could be attached to the support or supports, for example between 10 mm and 500 mm and preferably between 100 mm and 200 mm, above the ground surface. Alternatively the fastening component, with a length of resiliently extensible and/or inextensible material, that is fastened to the sheeting, textile or film, could be attached to the support or supports at the ground surface or could be suspended above the crops if the sheeting, textile or film needs to above the crop to impart its benefits such as to provide shade, light transmission properties, wind cover or protection from pests.

The preferred form fastening component of the invention is arranged to anchor the agricultural sheeting, textile or film 2 to a suitable support. The support could comprise a branch or trunk of a tree 4 or vine crop. Alternatively, the support could comprise a suitable stake, peg, post or pole or a wire tensioned along a crop row.

A preferred form fastening component 10 is shown in Figure 2. The fastening component 10 includes two prongs 12 and 13, which are arranged to pierce the sheeting, textile or film 2. Where the material 2 is formed from a suitable non-woven, woven or knitted textile material, the prongs 12 and 13 can be simply forced through the material. Where the material is formed from a weaker material like a film, it is envisaged that the material could be provided with a length of reinforced material around the perimeter through which the prongs are forced. Alternatively, the sheeting, textile or film material 2 could be provided with reinforced apertures, eyelets, domes or similar through which prongs 12 and 13 may be engaged, as will be described below.

One preferred form fastening component 10 is formed from a length of wire and the ends of the wire are shaped to form prongs 12 and 13. Where the fastening component is formed from a length of wire, it will be appreciated that successive lengths of wire could be cut at an angle to provide the prongs with sharp points to assist in piercing the sheeting, textile or film 2.

As shown in Figure 2, the length of wire is preferably bent intermediate of its length to form two arms, each arm terminating in one of prongs 12 and 13. As shown in Figure 2 each of the arms is preferably bent back on itself at greater than a right angle to form the prongs, thereby reducing accidental disengagement of the prongs from the textile 2. The wire is preferably bent so that each arm is of substantially equal length. The shape of the arms and prongs are designed to anchor the agricultural sheeting, textile or film securely and yet be fastened to and unfastened from the sheeting, textile or film easily.

The distance between the prong tips as indicated at 15A is preferably less than the distance between each arm/prong junction as indicated at 15B. This arrangement has the effect of tensioning the prongs together with the sheeting, textile or film when the prongs are inserted into the material thereby further reducing the opportunity for accidental disengagement.

Alternatively, the distance between the prong tips as indicated at 15A could be equal to or greater than the distance between each arm/prong junction as indicated at 15B. Where the distance is greater, it has the effect of tensioning the prongs together with the sheeting, textile or film when the prongs are inserted into the material as for 15A.

The fastening component 10 is also provided with attachment means enabling a length of material to be attached to the component 10 to fix the component to a support. One form of attachment means is shown as an eye 14. Each of the arms of the fastening component is preferably cranked away from the other and then towards the other arm part way along the length of each arm as shown to form the attachment eye 14.

A preferred form extensible or inextensible material 20 is arranged to be releasably fastened at one end to the eye 14 of the fastening component 10 and releasably fastened at the other end to support 4. The preferred form material 20 comprises a length of resiliently extensible material in the shape of a cord formed of rubber or a synthetic elastic material. The preferred cord is provided with loops 22 and 24 at each end of the cord. Loops are preferably formed by doubling a length of cord 20 back on itself to form a loop and securing the loop with a suitable length of wire or plastic 26.

The arms of the fastening component 10 are preferably tensioned towards each other to close the eye 14. Loop 22 of cord 20 in use is passed over one of prongs 12 or 13 and pulled between the arms through point 16 and into the eye 14. As the arms are tensioned toward each other at point 16, the loop 22 is retained within eye 14.

The preferred eye 14 is substantially quadrilateral in shape so that loop 22 is retained in the eye 14 at point 30, thereby reducing lateral movement of the loop 22 with respect to the fastening component 10.

As shown in Figure 2, loop 24 could be secured to support 4 with a staple 32 or other suitable fastener for example a nail or spike or by a length of twine tried around the support.

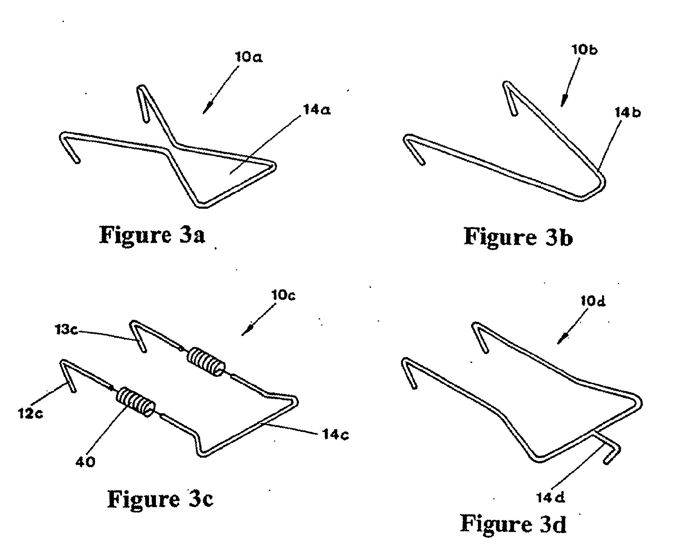

Figures 3A, 3B, 3C, 3D illustrate further preferred forms of fastening component. As shown in Figure 3A, the attachment means 14A could be substantially triangular in shape and the arms of the fastening component 10A could be spaced apart so as not to close the attachment means 14A.

As shown in Figure 3B, the fastening component 10B could be formed from two arms which are not cranked away from each other and towards each other along the length of each arm. The attachment means 14B is simply formed as a straight section between each of the arms.

Figure 3C illustrates a further preferred form fastening component 10C in which springs 40 or other resiliently extensible material are positioned between the prongs 12C and 13C and the attachment means 14C.

As shown in Figure 3D, the attachment means could comprise a hook 14D or loop to which the cord is attached.

It will be appreciated that the fastening component could be formed from a single length of inextensible wire or could alternatively be formed from a combination of extensible and inextensible wire materials. The fastening component could also be formed entirely or at least partly of plastic and/or plastic strengthening materials. The plastic or similar synthetic type materials could be formed partly or completely from extensible or inextensible materials or a combination of the above materials.

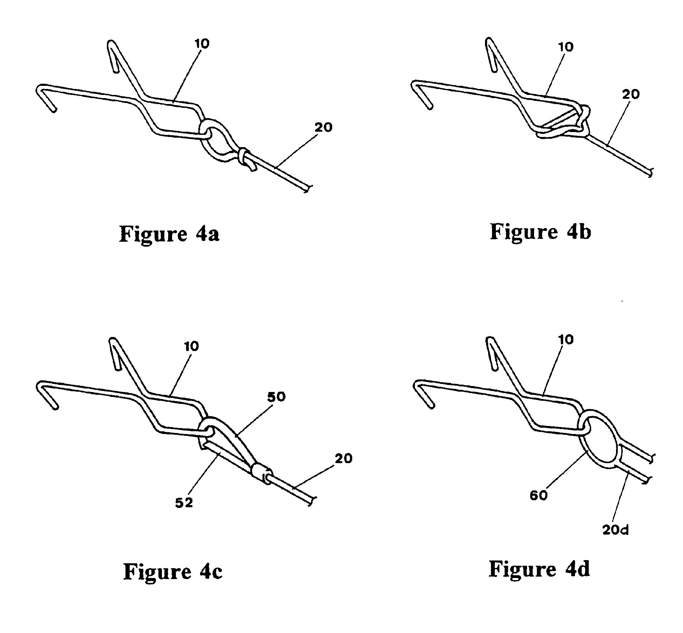

Figures 4A to 4D illustrate preferred forms of cord and methods of attachment to the fastening component. It will be appreciated that cord 20 could be provided with a suitable loop, hook or clip at one or both ends. Figure 4A illustrates the cord 20 of Figure 2 fastened to the fastening component 10, having passed the loop 20 between the arms of the fastening component. As shown in Figure 4B, the cord 20 could alternatively be threaded through the eye of the fastening component 10 and then pulled tight as shown.

Referring to Figure 4C, the cord 20 could alternatively terminate in a hook 50 formed from a suitable plastics material. As shown in Figure 4C, the hook 50 could be formed as a clip having a suitable closure or retainer 52.

Figure 4D illustrates a further preferred form cord 20D formed of rubber, terminating in a reinforced rubber ring 60, which is threaded onto the fastening component 10.

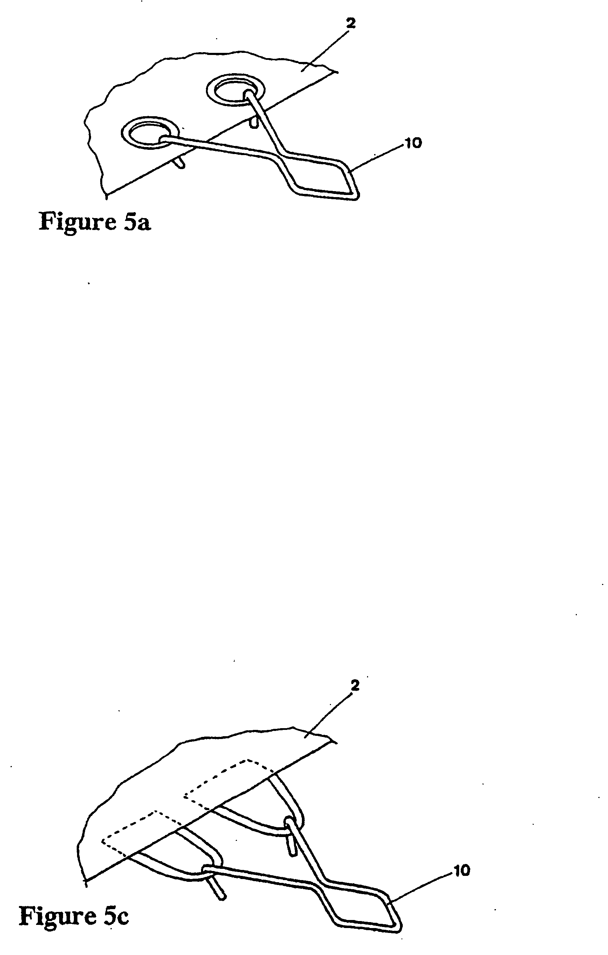

Figures 5A and 5C illustrate preferred forms of apertures, eyelets, domes or similar means to prevent or at least restrict the prong or prongs from ripping the agriculture sheeting, textile or film.

Figure 5A shows eyelets formed in the sheeting, textile or film 2 and fastening component 10 of Figure 2 located in the eyelets. The eyelet(s) could alternatively be formed as a reinforced section of material secured to the sheeting, textile or film which is pierced by the prongs of the component. Figure 5C is a dome or clip type fastener where the prongs are placed through a loop associated with but external to the sheeting, textile or film 2.

The cord could be formed entirely of an extensible or inextensible material, or could be formed of an extensible material along part of its length and an inextensible material along part of its length. For example, the extensible cord could be attached to a suitable inextensible plastic strapping or twine for part of its length. The plastic strapping and twine is generally less expensive than the extensible materials, therefore reducing production costs. The plastic strap or twine may also be arranged to have variable length to act as an adjustment system to vary the tension on the cord, depending on the requirements of the system.

In use, the cord 20 is secured to support 4, for example by driving a staple 32, spike or nail into the support 4. The other end of the cord is attached to the fastening component 10 and the cord 20 is stretched by pulling the fastening component 10 away from the support 4 and connecting the fastening component 10 to the sheeting, textile or film 2 while the cord 20 is stretched to place the sheeting, textile or film 2 under tension. Where it is desired to anchor a length of sheeting, textile or film, it is envisaged that the above step could be repeated to connect successive fastening components 10 and cords 20 along the textile or film 2 to anchor the textile or film 2 to one or more supports 4.

The preferred fastening component is arranged so that the component is easily and quickly engageable and disengageable with material 2, the cord 20 is easily and quickly engageable and disengageable with the component, and the cord is easily and quickly engageable and disengageable with support 4. When the material 2 is used as ground cover, this allows the material 2 to be removed from the component 10 and/or cord along one side of a row of crops or trees and folded back in the other row, then later unfolded and reattached, or unattached along both sides of the material 2 and removed from the field. Such easy and quick reattachment is desirable during installation of the material in the spring and removal of the material 2 in the autumn. Easy and quick reattachment is also desirable for time critical activities such as during spring frosts to fold back the material to allow ground heat being held by the material 2 to be more easily released to reduce frost damage and for crops with multiply harvest picks where it is desirable to have the material in place between picks and where it is desirable to fold back the material at each harvest pick.

Once the material 2 is fastened in accordance with the invention, for example, as ground cover, a tractor or similar traffic may be driven over the material 2. The pulling force of the wheels of the traffic pulls on the cover and this force is transferred to the cord, causing the cord to stretch. As the tractor or traffic moves down the row past the tensioned cord, the pulling force is removed and the cord returns to its resting position.

In areas of high wind, the force of the wind tends to lift the material 2 away from the ground. This lifting or pulling force is partly absorbed by the tensioned cord, which acts similarly to a shock absorber. The material 2 lifts on one side due to the wind, and under pressure from the wind and rubber cord or band, the other side of the material then lifts to release the pressure. The material 2 develops a pulsing or wave action along the surface in response to the wind. This pulsing force, which absorbs some of the wind's force, rather than being borne fully on the material and fasteners, gives a more effective and efficient fastening system. In addition, the pulsing or wave action acts as a force to clean soil, leaves or fruit from the surface of the material 2.

It will be appreciated that the material may be used as ground cover, but may also be used as greenhouse or other crop covers, shade cloth, windbreak, bird netting or other uses. The fastening component may be used to fasten this material regardless of the us which is made of the material.

The foregoing describes the invention including preferred forms thereof. Alterations and modifications as will be obvious to those skilled in the art are intended to be incorporated within the scope hereof as defined by the accompanying claims.

## Claims

1. A fastening component (10) for use in anchoring agricultural sheeting, textile or film (2) to a support (4), including two arms, each arm including a prong (12, 13) adapted to pierce the sheeting, textile or film (2) to connect the component (10) to the sheeting, textile or film (2), the two arms also being joined at an attachment eye (14) having an entry to the attachment eye defined between two intermediate portions of the two arms and the two arms resiliently moving at least one away from the other when a hook or loop (22, 24) on one end of a length of resiliently extensible and/or inextensible material (20) is manually pulled through said entry and into the eye (14) to connect the hook or loop (22, 24) to the fastening component (10).

2. A fastening component according to claim 1 wherein the component (10) is formed from wire or plastic.

3. A fastening component as claimed in claim 2 wherein the prongs (12, 13) extend at an acute angle to the arms of the component (10).

4. A fastening component as claimed in claim 1 wherein the component is formed from a length of wire each end of which forms a prong (12, 13) of the component.

5. A fastening component as claimed in claim 4 wherein the ends of the length of wire are cut at an angle to provide sharpened points to the prongs of the component.

6. A fastening component as claimed in either of claims 4 and 5 wherein the length of wire is bent intermediate of its length to form two arms each of which extends to form one side of said attachment eye and then one of said prongs and wherein each of the arms is cranked away from and then towards the other arm partway along the length of each arm to form said attachment eye (14).

7. A fastening component as claimed in claim 6 wherein the arms are tensioned towards each other to close the entry to said eye (14)but such that a said hook or loop (22, 24) may be passed over one of the prongs and between the tensioned arms and into the eye to be attached to the fastening component.

8. A fastening component as claimed in claim 5 or claim 6 wherein at their ends each of the arms is bent back on itself at greater than a right angle to form said prongs.

9. A fastening component as claimed in any one of claims 4 to 8 wherein the distance between the prong tips is less than the distance between each arm to prong junction.

10. A fastening component as claimed in any one of claims 4 to 9 wherein each of the arms is of substantially the same length.

11. A fastening component as claimed in any one of claims 1 to 10 wherein the eye is substantially quadrilateral in shape.

12. A fastening component as claimed in any one of the preceding claims in combination with a length of resiliently extensible material, arranged to be releasably fastened at one end to the eye and releasably fastened at the other end to the support.

13. A fastening component as claimed in claim 12 wherein the length of resiliently extensible material is provided with a loop at one or both ends.

14. A fastening component as claimed in claim 12 wherein the length of resiliently extensible material is provided with a hook at one or both ends.

15. A fastening component as claimed in any one of claims 12 to 14 wherein the length of resiliently extensible material is cord formed of rubber or a synthetic elastic material.

16. A method of anchoring agricultural sheeting, textile or film (2) to a support (4) including the steps of connecting a length of resiliently extensible or inextensible material (20) to a fastening component (10) as claimed in claim 1 and then attaching the fastening component (10) to the sheeting, textile or film (2) by piercing the prong(s) (12, 13) of the component (10) through the sheeting, textile or film (2).

17. A method according to claim 16 including piercing the prongs of the component through a reinforced region of the sheeting, textile or film.

18. A method as claimed in either one of claims 16 or 17 wherein the length of material is resiliently extensible and the method includes attaching the length of material at one end to said support (4), and at its other end to said fastening component (10), stretching the length of material by pulling the fastening component away from the support and connecting the fastening component to the sheeting, textile or film (2), while the resilient means is stretched thereby placing the sheeting, textile or film under tension.

19. A method as claimed in any one of claims 16 to 18 including repeating said steps to connect a fastening component (10) and a length of material between the sheeting, textile or film (2) and a support or supports (4).

20. A method as claimed in claim 19 including fixing the sheeting, textile or film between about 10 mm and about 500 mm above the ground.

21. Agricultural sheeting, textile or film anchored to a support or supports by the method of any one of claims 16 to 20.

## Patentansprüche

1. Befestigungs-Komponente (10) zur Verwendung beim Verankern von Planen, TextilBahnen oder Filmen (2) in der Landwirtschaft an einem Träger (4), die zwei Arme einschließt, wobei jeder Arm einen gezackten Haken (12, 13) einschließt, der dafür angepasst ist, die Plane, Textil-Bahn oder den Film (2) zu durchdringen und so die Komponente (10) mit der Plane, Textil-Bahn oder dem Film (2) zu verbinden, wobei die beiden Arme auch zu einem Befestigungs-Auge (14) verbunden sind, das einen Eintritt in das Befestigungs-Auge aufweist, der zwischen zwei Zwischen-Abschnitten der beiden Arme definiert ist und wobei sich die beiden Arme elastisch wenigstens einer von dem anderen weg bewegen, wenn ein Haken oder eine Schlaufe (22, 24) an einem Ende einer Länge eines elastisch dehnbaren und/oder nicht-dehnbaren Materials (20) manuell durch den Eintritt und in das Auge (14) gezogen wird und so der Haken oder die Schlaufe (22, 24) mit der Befestigungs-Komponente (10) verbunden wird.

2. Befestigungs-Komponente nach Anspruch 1, worin die Komponente (10) aus Draht oder Kunststoff gebildet ist.

3. Befestigungs-Komponente nach Anspruch 2, worin sich die gezackten Haken (12, 13) in einem spitzen Winkel zu den Armen der Komponente (10) erstrecken.

4. Befestigungs-Komponente nach Anspruch 1, worin die Komponente aus einer Länge eines Drahts gebildet ist, dessen jedes Ende einen gezackten Haken (12, 13) der Komponente bildet.

5. Befestigungs-Komponente nach Anspruch 4, worin die Enden der Länge des Drahts in einem Winkel abgeschnitten sind, um die gezackten Haken der Komponente mit geschärften Punkten zu versehen.

6. Befestigungs-Komponente nach einem der Ansprüche 4 und 5, worin die Länge des Drahts im Zwischenbereich ihrer Länge gebogen ist und so zwei Arme bildet, von denen sich jeder unter Bildung einer Seite des Befestigungs-Auges und dann eines der gezackten Haken erstreckt und worin jeder der Arme auf einem Teil des Weges entlang der Länge jedes Arms in einem Winkel von dem anderen Arm weg und dann auf diesen zu gebogen ist, unter Bildung des Befestigungs-Auges (14).

7. Befestigungs-Komponente nach Anspruch 6, worin die Arme aufeinander zu gespannt sind und so den Eingang zu dem Auge (14) schließen, jedoch derart, dass der Haken oder die Schlaufe (22, 24) über einen der gezackten Haken und zwischen den gespannten Armen in das Auge geführt werden kann und so an der Befestigungs-Komponente befestigt werden kann.

8. Befestigungs-Komponente nach Anspruch 5 oder Anspruch 6, worin jeder der Arme an den Enden auf sich selbst in einem Winkel größer als ein rechter Winkel zurück gebogen ist und so die gezackten Haken bildet.

9. Befestigungs-Komponente nach einem der Ansprüche 4 bis 8, worin die Entfernung zwischen den Enden der gezackten Haken geringer ist als die Entfernung zwischen jedem Arm und der Haken-Verbindung.

10. Befestigungs-Komponente nach einem der Ansprüche 4 bis 9, worin jeder der Arme im wesentlichen dieselbe Länge aufweist.

11. Befestigungs-Komponente nach einem der Ansprüche 1 bis 10, worin das Auge im wesentlichen viereckige Form hat.

12. Befestigungs-Komponente nach einem der vorangehenden Ansprüche, in Kombination mit einer Länge eines elastisch dehnbaren Materials, derart angeordnet, dass sie an einem Ende an dem Auge lösbar befestigt ist und an dem anderen Ende an dem Träger lösbar befestigt ist.

13. Befestigungs-Komponente nach Anspruch 12, worin die Länge des elastisch dehnbaren Materials mit einer Schlaufe an einem oder beiden Enden versehen ist.

14. Befestigungs-Komponente nach Anspruch 12, worin die Länge des elastisch dehnbaren Materials mit einem Haken an einem oder beiden Enden versehen ist.

15. Befestigungs-Komponente nach einem der Ansprüche 12 bis 14, worin die Länge des elastisch dehnbaren Materials aus Kautschuk oder einem synthetischen elastischen Material Zug-geformt ist.

16. Verfahren zum Verankern von in der Landwirtschaft verwendbaren Planen, TextilBahnen oder Filmen (2) auf einem Träger (4), das die Schritte des Verbindens einer Länge eines elastisch dehnbaren oder nicht-dehnbaren Materials (20) an einer Befestigungs-Komponente (10) nach Anspruch 1 und das anschließende Befestigen der Befestigungs-Komponente (10) an der Plane, Textil-Bahn oder dem Film (2) unter Eindringen des/der gezackten Haken(s) (12, 13) der Komponente (10) durch die Plane, Textil-Bahn oder den Film (2) einschließt.

17. Verfahren nach Anspruch 16, das das Eindringen der gezackten Haken der Komponente durch einen verstärkten Bereich der Plane, Textil-Bahn oder des Films einschließt.

18. Verfahren nach einem der beiden Ansprüche 16 oder 17, worin die Länge des Materials elastisch dehnbar ist und das Verfahren das Befestigen der Länge des Materials an einem Ende an dem Träger (4) an seinem anderen Ende an der Befestigungs-Komponente (10), das Recken der Länge des Materials durch Ziehen an der Befestigungs-Komponente weg von dem Träger und Verbinden der Befestigungs-Komponente mit der Plane, Textil-Bahn oder dem Film (2) einschließt, während das elastische Mittel gereckt wird und **dadurch** die Plane, Textil-Bahn oder den Film unter Spannung gesetzt wird.

19. Verfahren nach einem der Ansprüche 16 bis 18, das das Wiederholen der Schritte Verbinden einer Befestigungs-Komponente (10) und einer Länge an Material zwischen der Plane, Textil-Bahn oder dem Film (2) und einem Träger oder Trägem (4) einschließt.

20. Verfahren nach Anspruch 19, das das Fixieren der Plane, Textil-Bahn oder des Films zwischen etwa 10 mm und etwa 500 mm oberhalb des Bodens einschließt.

21. In der Landwirtschaft verwendbare Plane, Textil-Bahn oder Film, verankert an einem Träger oder Trägem über das Verfahren nach einem der Ansprüche 16 bis 20.

## Revendications

1. Composant (10) de fixation pour utilisation dans l'ancrage d'une feuille, d'un textile ou d'un film agricole (2) à un support (4), incluant deux bras, chaque bras incluant une dent (12, 13) adaptée pour percer la feuille, le textile ou le film (2) afin de relier le composant (10) à la feuille, au textile ou au film (2), les deux bras étant également liés au niveau d'un oeil (14) d'attache comportant une entrée dans l'oeil d'attache définie entre deux parties intermédiaires des deux bras, et les deux bras bougent élastiquement au moins l'un en s'écartant de l'autre lorsqu'un crochet ou une boucle (22, 24), situé sur une extrémité d'une longueur d'un matériau élastiquement extensible et/ou non extensible (20), est tiré manuellement à travers ladite entrée et dans l'oeil (14) pour relier le crochet ou la boucle (22, 24) au composant (10) de fixation.

2. Composant de fixation selon la revendication 1, dans lequel le composant (10) est formé à partir d'un fil métallique ou de plastique.

3. Composant de fixation selon la revendication 2, dans lequel les dents (12, 13) s'étendent à un angle aigu par rapport aux bras du composant (10).

4. Composant de fixation selon la revendication 1, dans lequel le composant est formé d'une certaine longueur de fil métallique dont chaque extrémité forme une dent (12, 13) du composant.

5. Composant de fixation selon la revendication 4, dans lequel les extrémités de la longueur de fil métallique sont découpées à un certain angle pour fournir des pointes pointues aux dents du composant.

6. Composant de fixation selon l'une quelconque des revendications 4 et 5, dans lequel la longueur de fil métallique est coudée au milieu de sa longueur pour former deux bras dont chacun s'étend pour former un côté dudit oeil d'attache et, ensuite, l'une desdites dents, et dans lequel chacun des bras est coudé à l'écart de l'autre bras et ensuite vers celui-ci, à mi-chemin de la longueur de chaque bras pour former ledit oeil (14) d'attache.

7. Composant de fixation selon la revendication 6, dans lequel les bras sont tendus l'un vers l'autre pour fermer l'entrée dans ledit oeil (14) mais de sorte qu'un dit crochet ou une dite boucle (22, 24) peut passer sur l'une des dents et entre les bras tendus et dans l'oeil pour être attaché au composant de fixation.

8. Composant de fixation selon la revendication 5 ou la revendication 6, dans lequel, au niveau de leurs extrémités, chacun des bras est coudé vers l'arrière sur lui-même à un angle plus grand qu'un angle droit pour former lesdites dents.

9. Composant de fixation selon l'une quelconque des revendications 4 à 8, dans lequel la distance entre les pointes de dent est inférieure à la distance entre chaque bras au niveau de la jonction de dent.

10. Composant de fixation selon l'une quelconque des revendications 4 à 9, dans lequel chacun des bras a sensiblement la même longueur.

11. Composant de fixation selon l'une quelconque des revendications 1 à 10, dans lequel l'oeil a une forme sensiblement quadrilatérale.

12. Composant de fixation selon l'une quelconque des revendications précédentes, en combinaison avec une longueur de matériau élastiquement extensible agencée pour être fixée de manière libérable à l'oeil à une extrémité, et pour être fixée de manière libérable au support à l'autre extrémité.

13. Composant de fixation selon la revendication 12, dans lequel la longueur de matériau élastiquement extensible est pourvue d'une boucle à une extrémité ou aux deux extrémités.

14. Composant de fixation selon la revendication 12, dans lequel la longueur de matériau élastiquement extensible est pourvue d'un crochet à une extrémité ou aux deux extrémités.

15. Composant de fixation selon l'une quelconque des revendications 12 à 14, dans lequel la longueur de matériau élastiquement extensible est une corde formée de caoutchouc ou d'un matériau synthétique élastique.

16. Procédé d'ancrage d'une feuille, d'un textile ou d'un film agricole (2) à un support (4) incluant les étapes dans lesquelles on relie une certaine longueur de matériau élastiquement extensible ou non extensible (20) à un composant (10) de fixation selon la revendication 1, et on assujettit ensuite le composant (10) de fixation à la feuille, au textile ou au film (2) en amenant la/les dents (12, 13) du composant (10) à percer la feuille, le textile ou le film (2).

17. Procédé selon la revendication 16, incluant le fait d'amener les dents du composant à percer une région renforcée de la feuille, du textile ou du film.

18. Procédé selon l'une ou l'autre des revendications 16 ou 17, dans lequel la longueur de matériau est élastiquement extensible et le procédé inclut l'assujettissement, à une extrémité, de la longueur de matériau audit support (4) et, à l'autre extrémité, audit composant (10) de fixation, l'étirement de la longueur de matériau en tirant le composant de fixation à l'écart du support et en reliant le composant de fixation à la feuille, au textile ou au film (2), tout en étirant le moyen élastique, en plaçant ainsi la feuille, le textile ou le film sous tension.

19. Procédé selon l'une quelconque des revendications 16 à 18, incluant la répétition desdites étapes dans le but de relier un composant (10) de fixation et une certaine longueur de matériau entre la feuille, le textile ou le film (2) et un support ou des supports (4).

20. Procédé selon la revendication 19, incluant la fixation de la feuille, du textile ou du film entre environ 10 mm et environ 500 mm au-dessus du sol.

21. Feuille, textile ou film agricole ancré à un support ou à des supports par le procédé selon l'une quelconque des revendications 16 à 20.
